# EUROPEAN PATENT APPLICATION

(11) **EP 2 433 991 A1**
(43) Date of publication of application: **28.03.2012**
(21) Application number: 10777697.3
(22) Date of filing: 13.05.2010
(51) Int. Cl.: C09D 183/06, B32B 27/00, C09D 7/12, G02B 1/10, G02B 5/23, G02C 7/00, G02C 7/10

(54) **COATING COMPOSITION AND OPTICAL ARTICLE**

(30) Priority: 20.05.2009 JP 2009121572
(71) Applicant: Tokuyama Corporation, Shunan-shi, Yamaguchi-ken 745-8648 (JP)
(72) Inventor: MORI, Katsuhiro, Shunan-shi Yamaguchi 745-8648 (JP); NAKATSUKASA, Shunichiro, Shunan-shi Yamaguchi 745-8648 (JP)
(74) Representative: Duckworth, Timothy John
(86) International application number: PCT/JP2010/058115
(87) International publication number: WO 2010/134464

(57) **Abstract**

[Problems] A coating composition preferably used for forming a hard coating by being applied and cured on a light-transmitting member such as a highly refractive plastic lens or a highly refractive photochromic plastic lens having a function for developing a color, the coating composition markedly improving weather resistance (preventing discoloration) while sustaining high refractive index, scratch resistance and excellent adhesion to the optical material.

[Means for Solution] The coating composition comprises (A) a fine granular metal oxide containing titanium oxide and (B) a fine granular metal oxide containing titanium oxide having dissimilar properties as selected by a specific light irradiation test and, further, contains (C) an epoxy group-containing organosilicon compound such as γ-glycidoxypropyltrimethoxysilane, (D) water, (E) an organic solvent such as methyl alcohol, and (F) a curing catalyst such as aluminum acetyl acetonato or magnesium perchlorate at specific ratios.

## Description

### Technical Field:

This invention relates to a coating composition for forming a hard coating on the surfaces of a light-transmitting member such as a highly refractive plastic lens and, specifically, a highly refractive photochromic lens to impart scratch resistance, weather resistance and durability thereto, and to an optical article having the hard coating.

### Background Art:

Plastic lenses have such features as small weight, safety, easy workability and fashionableness that are not found in the glass lenses, and are now becoming a main stream in the field of spectacle lenses. In recent years, further, the plastic lenses have been produced in decreased thicknesses yet providing high refractive indices.

Plastic lenses, however, have such a defect that they get easily scratched and, therefore, attempts have been made to improve such a defect by forming a silicone-type hard coating on the surfaces thereof. However, since the plastic lens which is the base material has been formed to be highly refractive, the hard coating must be highly refractive, too. Otherwise, a problem arouses in that interference fringes develop due a difference in the refractive index between the lens material and the hard coating to deteriorate the appearance. A coating composition (also called "coating solution" or "coating material") used for forming the hard coating is, usually, a liquid composition comprising chiefly a fine granular metal oxide, an alkoxysilane compound having a polymerizable organic functional group, a curing catalyst, an acid aqueous solution and an organic solvent. The liquid composition is applied onto the base material, heated and cured so that the solvent is volatilized to thereby form a film.

In order to solve the above problem, there has been proposed an art that uses titanium oxide or zirconium oxide having a high refractive index as the fine granular inorganic oxide to be added to the coating composition (patent document 1). There has, further, been proposed an art that uses a composite oxide thereof (patent document 2). However, it became obvious that the above hard coatings having high refractive indices are accompanied by a problem in that their colors change into blue or yellow upon irradiated with ultraviolet rays. Discoloration of the hard coating can be linked to a color which the plastic lens develops, and could become a cause of defective appearance after used for extended periods of time.

In order to improve the color or the weather resistance of the hard coating, there have been proposed arts that use titanium oxide and tin oxide, as well as a composite metal oxide thereof to which zirconium oxide is, further, bonded on an atomic level (patent document 3, patent document 4, patent document 5). According to these arts, a plurality of metal oxides inclusive of titanium oxide are compounded on an atomic level in an attempt to improve the weather resistance against the irradiation with ultraviolet rays without, however, still attaining satisfactory results. There has, further, been proposed an art of using fine granules containing titanium oxide as nuclei, and covering them with fine granules of zirconium oxide or silicon oxide (patent document 6) without, however, still attaining the weather resistance to a sufficient degree like the above arts.

Further, in order to solve the problem in that the titanium oxide develops a blue color when it is reduced, there has been proposed a method that uses fine granules containing titanium oxide in combination with fine granules containing no titanium oxide (patent document 7). However, this method cannot often be applied to highly refractive index lenses due to the use of fine granules containing no titanium oxide. Besides, though the problem of developing blue color can be solved, there remains a defect in that no effect is obtained for preventing discoloration of the fine granules that contain titanium oxide that develops yellow color still leaving room for improvement.

### Prior Art Documents:

### Patent Documents:

Patent document 1: JP-B-63-37142
Patent document 2: JP-A-11-310755
Patent document 3: Japanese Patent No. 3069330
Patent document 4: Japanese Patent No. 4022970
Patent document 5: Japanese Patent No. 4069330
Patent document 6: Japanese Patent No. 3203142
Patent document 7: JP-A-2008-310005

### Outline of the Invention:

### Problems that the Invention is to Solve:

The present inventors have studied the problem of discoloration from a viewpoint different from improving the fine granular metal oxides. As a result, the inventors paid attention to the value "YI₁" (index of a yellowish color specified under the JIS K7103) of a dispersion solution containing fine granular metal oxides, discovered the fact that the discoloration after irradiated with ultraviolet rays can be prevented upon selecting and using in combination a fine granular metal oxide of which the dispersion solution exhibits a different value "YI₁", and thus completed the invention. No idea has yet been proposed for preventing the discoloration of the hard coating from this point of view.

### Means for Solving the Problems:

According to the present invention, there is provided a coating composition comprising:
(A) a fine granular metal oxide containing titanium oxide of which a coating that is formed exhibiting a value ΔYI of 0.5 to 10.0 as measured by the following light irradiation test;
(B) a fine granular metal oxide containing titanium oxide of which a coating that is formed exhibiting a value ΔYI of -0.1 to -1.0 as measured by the following light irradiation test;
(C) an epoxy group-containing organosilicon compound;
(D) water;
(E) an organic solvent; and
(F) a curing catalyst;
wherein the water (D) is contained in an amount of 5 to 70 parts by mass, the organic solvent (E) is contained in an amount of 100 to 350 parts by mass and (F) the curing catalyst is contained in an amount of 0.2 to 10 parts by mass per a total of 100 parts by mass of the fine granular metal oxide (A), the fine granular metal oxide (B) and the epoxy group-containing organosilicon compound (C); and
the essentials of the total of 100 parts by mass of the fine granular metal oxide (A), the fine granular metal oxide (B) and the epoxy group-containing organosilicon compound (C) being such that the total amount of the fine granular metal oxide (A) and the fine granular metal oxide (B) is 20 to 60 parts by mass, the amount of the epoxy group-containing organosilicon compound (C) is 40 to 80 parts by mass, and the mass ratio (B/A) of the fine granular metal oxide (A) and the fine granular metal (B) is 0.2 to 6.0.

### [Light irradiation test]

1) Preparation of a coating solution: 13.4 Parts by mass of a 0.05N hydrochloric acid aqueous solution is added to 60 parts by mass of a γ-glycidoxypropyltrimethoxysilane with stirring maintaining a temperature in a range of 15 to 30°C. Thereafter, the mixture is stirred for about 2 hours and to which are, successively, added 0.2 parts by mass of a silicone surfactant (trade name "L-7001" manufactured by Toray-Dow Coning Co.), 120 parts by mass of a t-butyl alcohol and 0.7 parts by mass of a tris(2,4-pentanedionato)aluminum (III). The solution is stirred at room temperature for 30 minutes, and to which are added 40 parts by mass (excluding the dispersion medium) of the fine granular metal oxides dispersed in a dispersion medium, and the mixture is stirred at room temperature for another 2 hours, and is used as a coating solution.
2) Coating method: A glass plate is dipped in the thus obtained coating solution and is pulled up from the coating solution at a rate of 10 to 30 cm/min. so that the thickness of the coating finally obtained is about 2 µm. Thereafter, the coating is cured at 70°C for 10 minutes and at 110°C for 2 hours to obtain a laminate having a coating of a thickness of about 2 µm on the glass plate.
3) Light irradiation test of the laminate: The obtained laminate is irradiated with an ultraviolet ray of a wavelength of 405 nm at an intensity of 150 mW/cm² for 5 minutes in a nitrogen atmosphere to measure a degree of yellow color (YI₁), and a difference (ΔYI = YI₁ - YI₀) is found from the degree of yellow color (YI₀) of the laminate of before irradiated with ultraviolet rays.
In the above coating composition, it is desired that the fine granular metal oxide (B) is a fine granular composite metal oxide containing a fine granular titanium oxide of which the surfaces are covered with a silane coupling agent.

According to the invention, further, there is provided an optical article comprising a light-transmitting member and a hard coating formed on the surfaces of the light-transmitting member, the hard coating being the coating obtained by curing the above-mentioned coating composition.
In the optical article, it is desired that:
(1) The light-transmitting member is a light-transmitting member having photochromic properties; and
(2) The light-transmitting member having photochromic properties is provided with a photochromic coating obtained by curing a photochromic compound-containing curable composition on the surfaces of an optical material, and a hard coating is formed on the surface of the photochromic coating.

### Effects of the Invention:

The hard coating obtained by applying the coating composition of the invention onto the light-transmitting member and curing it works to greatly improve the weather resistance (prevents discoloration) while maintaining a high refractive index, scratch resistance and adhering property to the light-transmitting member. Therefore, the coating composition can be favorably applied not only to the ordinary highly refractive index plastic lenses but also to highly refractive index or, further, to very highly refractive index photochromic plastic lenses having a function of developing color. Moreover, the coating composition of the invention utilizes a simple and existing method from the standpoint of its means of solution, and offers a very high industrially utilizable value.

In the invention, the reason has not been clarified yet why the apparent discoloration can be prevented but the inventors speculate it as described below.
That is, as a result of using the fine granular metal oxide (A) that develops yellow color upon the irradiation with ultraviolet rays and the fine granular metal oxide (B) that develops blue color being mixed together, it is presumed that a change in the color tone is suppressed due to the oxidation and reduction taking place between the fine granular metal oxide (A) and the fine granular metal oxide (B) in the coating that is formed. Namely, the titanium oxide is, usually, photoreduced to exhibit a blue color. Upon making present a metal oxide that oxidizes the photoreduced titanium oxide on the surfaces of the titanium oxide and in the vicinities thereof, however, it is presumed that a change in the color tone is suppressed. It is presumed that the fine granular metal oxide (A) that develops yellow color is in a state where there is much metal oxide for oxidizing the titanium oxide and that the fine granular metal oxide (B) that develops blue color is in a state where there is less metal oxide for oxidizing the titanium oxide. With these two fine granular metal oxides being present together, it is presumed that the metal oxides containing titanium oxide are suppressed from undergoing oxidation/reduction reaction, and a change in the color tone is suppressed.

Further, upon combining the fine granular metal oxide (A) and the fine granular metal oxide (B) together at a specific ratio, the scratch resistance and the weather resistance can also be improved.

### Mode for Carrying Out the Invention:

The coating composition of the invention chiefly comprises:
(A) a fine granular metal oxide containing titanium oxide of which a value "YI₁" of a dispersion solution thereof is 0.5 to 10.0 (hereinafter also called "fine granular metal oxide (A)";
(B) a fine granular metal oxide containing titanium oxide of which a value "YI₁" of a dispersion solution thereof is -0.1 to -1.0 (hereinafter also called "fine granular metal oxide (B)";
(C) an epoxy group-containing organosilicon compound; and (F) a curing catalyst;
which are dispersed in a solution. Here, it is important that the fine granular metal oxide (A) and the fine granular metal oxide (B) are selected in advance by the method described below, and these two are used in combination at a specific ratio.

The fine granular metal oxides are selected by the following light irradiation test.

### [Light irradiation test]

1) Preparation of a coating solution: 13.4 Parts by mass of a 0.05N hydrochloric acid aqueous solution is added to 60 parts by mass of a γ-glycidoxypropyltrimethoxysilane with stirring maintaining a temperature in a range of 15 to 30°C. Thereafter, the stirring is continued for about 2 hours and to which are, successively, added 0.2 parts by mass of a silicone surfactant (trade name "L-7001" manufactured by Toray-Dow Coning Co.), 120 parts by mass of a t-butyl alcohol and 0.7 parts by mass of a tris(2,4-pentanedionato)aluminum (III). The solution is stirred at room temperature for 30 minutes, and to which are added 40 parts by mass (excluding the dispersion medium) of the fine granular metal oxides dispersed in a dispersion medium, and the mixture is stirred for another 2 hours at room temperature, and is used as a coating solution.
2) Coating method: A glass plate is dipped in the thus obtained coating solution and is pulled up from the coating solution at a rate of 10 to 30 cm/min. so that the thickness of the coating finally obtained is about 2 µm. Thereafter, the coating is cured at 70°C for 10 minutes and at 110°C for 2 hours to obtain a laminate having a coating of a thickness of about 2 µm on the glass plate.
3) Light irradiation test of the laminate: The obtained laminate is irradiated with an ultraviolet ray of a wavelength of 405 nm at an intensity of 150 mW/cm² for 5 minutes in a nitrogen atmosphere to measure a degree of yellow color (YI₁), and a difference (ΔYI = YI₁ - YI₀) is found from the degree of yellow color (YI₀) of the laminate of before irradiated with ultraviolet rays.
The light irradiation test is conducted in a nitrogen atmosphere and makes it possible to find the degree of yellow color maintaining good reproduceability. Moreover, since the light irradiation test is conducted in the nitrogen atmosphere, the same evaluation can be obtained as that of when an antireflection film for shutting off oxygen is formed on the coating of the laminate.

### <(A) Fine granular metal oxide>

The fine granular metal oxide (A) is selected by the light irradiation test described above and is, most desirably, selected out of the sols of the fine granular metal oxide containing titanium oxide dispersed in a dispersion medium such as an organic solvent placed in the market. In the case of the sols, the light irradiation testing is conducted in a manner as described below.
The content of the fine granular metal oxide in the sol is grasped in advance, the amount of the y-glycidoxypropyltrimethoxysilane or the like to be added is determined based on the amount thereof, and measurement is taken in compliance with the method described above. The test solution may contain an organic solvent such as methanol stemming from the sol, water, curing catalyst, leveling agent (surfactant) and the like. However, the organic solvent and water are almost all volatilized in the step of heating. Other components are blended in such amounts as will not affect the results of the weather resistance testing. Because of these reasons, it was confirmed that in the light irradiation test, the measured values were not affected.

As the sols, there can be exemplified:
*[HIT-335M6](manufactured by Nissan Kagaku Kogyo Co., solid component concentration of 30%; ΔYI = 1.3} comprising a fine granular composite metal oxide that contains titanium oxide (56.6% by mass), zirconium oxide (17.7% by mass), silicon oxide (11.0% by mass) and antimony pentoxide (14.7% by mass) dispersed in methanol; and
*[HIT-317M6]{manufactured by Nissan Kagaku Kogyo Co., solid component concentration of 30%; ΔYI = 6.0} comprising a fine granular composite metal oxide that contains titanium oxide (30.0% by mass), tin oxide (36.7% by mass), zirconium oxide (10.0% by mass), and silicon oxide (6.7% by mass) (6.7% by mass).
The fine granular the metal oxide (A) can be prepared by, for example, a method disclosed in Japanese Patent No. 4069330, and can be selected by measuring its ΔYI by the above "light irradiation testing" method.

### <(B) Fine granular metal oxide>

Similarly, the fine granular metal oxide (B), too, is selected by the light irradiation test and is, most desirably, selected out of the sols of the fine granular metal oxide containing titanium oxide placed in the market. As the sols, there can be exemplified:
*[TY106]{manufactured by JGC Catalysts and Chemicals Ltd., solid component concentration of 30%; ΔYI = -0.3} comprising a fine granular composite metal oxide that contains titanium oxide (66.6% by mass), zirconium oxide (4.7% by mass) and silicon oxide (32.2% by mass) dispersed in methanol;
*[TY108]{manufactured by JGC Catalysts and Chemicals Ltd., solid component concentration of 30%; ΔYI = -0.5} comprising a fine granular composite metal oxide that contains titanium oxide (78.0% by mass), zirconium oxide (1.6% by mass) and silicon oxide (19.6% by mass) dispersed in methanol; and
*[TY109]{manufactured by JGC Catalysts and Chemicals Ltd., solid component concentration of 25%; ΔYI = -0.5} comprising a fine granular composite metal oxide that contains titanium oxide (81.7% by mass), zirconium oxide (1.5% by mass) and silicon oxide (16.1% by mass) dispersed in methanol.
The fine granular metal oxide (B) can be prepared by, for example, a method disclosed in Japanese Patent No. 3203142, and can be selected by measuring its ΔYI by the above "light irradiation testing" method.

Both the fine granular metal oxide (A) and the fine granular metal oxide (B) are fine granules containing titanium oxide but having different ΔYIs probably because the oxidizing/reducing state of the titanium oxide is varying depending upon the bonding state and kind of the metal oxide present near the titanium oxide. Or it is considered that though the titanium oxide develops a blue color by itself, there are contained other metal oxides that develop yellow color in addition to the titanium oxide.
In either case, the fine granular metal oxide (A) and the fine granular metal oxide (B) must contain at least titanium oxide to attain a high refractive index of the hard coating that is formed. There is, however, no limitation on if the fine granular metal oxides (A) and (B) are assuming a composite form with any other metal oxides. For instance, there can be exemplified fine granular composite metal oxides assuming a composite form with the titanium oxide and any other metal oxide on an atomic level, fine granular composite metal oxides in a form in which the fine granular titanium oxide is covered with other fine granular metal oxide, or fine granular composite metal oxides assuming the above two kinds of states (fine granular composite metal oxides assuming a composite form with the titanium oxide and any other metal oxide on an atomic level and are, further, covered with other fine granular metal oxide).

As the metal oxide other than the titanium oxide, there can be exemplified silicon oxide, aluminum oxide, tin oxide, antimony pentoxide, zirconium oxide, iron oxide, indium oxide, tungsten oxide, zinc oxide, cerium oxide, thallium oxide and lanthanum oxide. As described above, they can be made present in a more fine granular state on the outer peripheral surfaces of the fine granules of titanium oxide as cores in a laminate structure or can be obtained as fine granular integral composite metal oxides being compounded on an atomic level.

The size of the fine granular metal oxides can be arbitrarily selected by taking the transparency and preservation stability of the hard coating into account but, usually, has an average grain size of 1 to 300 nm and, preferably, 1 to 200 nm.
As described above, the fine granular metal oxides can be used in any combination for their kinds of the metal oxides, composite structure thereof and grain sizes thereof depending upon the object. To improve the photo stability and preservation stability of titanium oxide, however, it is desired to use the fine granular metal oxides in combination with such metal oxides as silicon oxide, zirconium oxide and tin oxide.

The fine granular metal oxides are, usually, preserved being dispersed in a dispersion medium such as water or methanol. In order to improve the dispersion stability in the dispersion medium, further, the fine granular metal oxides may be covered with a known organosilicon compound that works as a silane coupling agent or with an amine compound or a carboxylic acid.
The fine granular metal oxides containing fine granular titanium oxide of which the surfaces are covered with the silane coupling agent in many cases represent the fine granular metal oxide (B) and the fine granular metal oxides of which the surfaces are not covered with the silane coupling agent but of which the surfaces are modified with an amine compound in many cases represent the fine granular metal oxide (A) though they cannot be exclusively so stated depending upon the kinds of the constituent metal oxides, kinds of the compounds to be covered and the degree of covering.

As the dispersion medium of the fine granular metal oxide { (A) or (B) }, there can be preferably used water or an alcohol type organic solvent such as methanol, ethanol, n-propanol, isopropanol, t-butyl alcohol, n-butyl alcohol or modified alcohol and, particularly preferably, methanol.
The ratio of the fine granular metal oxide present in the dispersion medium at this moment is, preferably, 20% by mass to 50% by mass and, more preferably, 25% by mass to 45% by mass. If the ratio is less than 20% by mass, the dispersion medium is not suited as a starting material for increasing the refractive index of the hard coating or for preparing a coating composition of a high solid component concentration. As a result, the refractive index, coating thickness and scratch resistance cannot be satisfied. If the ratio is more than 50% by mass, on the other hand, the fine granular metal oxide loses stability in the dispersion medium, and the dispersion medium becomes not suited as the starting material for preparing a stable coating composition.

The contents of the fine granular metal oxide (A) and the fine granular metal oxide (B) and the ratio of contents thereof are such that the total amount of the fine granular metal oxide (A) and the fine granular metal oxide (B) is 20 to 60 parts by mass per a total of 100 parts by mass of the fine granular metal oxide (A), the fine granular metal oxide (B) and the epoxy group-containing organosilicon compound (C), and the mass ratio (B/A) of the component (A) and the component (B) is 0.2 to 6.0.
If the total amount of the fine granular metal oxide (A) and the fine granular metal oxide (B) is less than 20 parts by mass, it becomes difficult to increase the refractive index of the obtained hard coating. Similarly, if the total amount thereof exceeds 60 parts by mass, adhering property decreases between the obtained hard coating and the highly refractive lens material and the hard coating develops cracks causing defective appearance.

Further, if the mass ratio (B/A) of the two is less than 0.2, the hard coating tends to develop yellow color after it is irradiated with ultraviolet rays and, besides, its scratch resistance tends to decrease, which is not desirable. If the mass ratio exceeds 6.0, on the other hand, the hard coating tends to develop blue color and besides, its weather resistance decreases and the adhering property decreases after the promotion test, which is not desirable. If the problem of developing yellow color/blue color, scratch resistance, weather resistance and the like are taken into consideration, the mass ratio (B/A) of the two is, more preferably, 0.25 to 5.0 and, further preferably, 0.5 to 5.0.
When prepared from the sol, the above contents of the fine granular metal oxide (A) and the fine granular metal oxide (B) are the values from which is removed the dispersion medium such as organic solvent or water in the sol, and substantially stand for the solid contents that remain after the dispersion medium has volatilized.

### < (C) Epoxy group-containing organosilicon compound>

The epoxy group-containing organosilicon compound (C) works as a binder for the fine granular metal oxides, forms a transparent cured body that serves as a matrix in the hard coating and, further, improves adhesiveness to the plastic lens material. A known compound that has heretofore been known as a silane coupling agent can be used without any limitation.

Concrete examples include
γ-glycidoxypropyltrimethoxysilane,
γ-glycidoxypropylmethyldimethoxysilane,
γ-glycidoxypropylmethyldiethoxysilane,
γ-glycidoxypropyltriethoxysilane and
β-(3,4-epoxycyclohexyl)ethyltrimethoxysilane.
Some of these compounds may often partly undergo hydrolysis or condensation. Therefore, examples also include those epoxy group-containing organosilicon compounds in which the hydrolyzable groups are partly or wholly hydrolyzed or are partly condensed.

In the invention, the epoxy group-containing organosilicon compound (C) having an epoxy group as an organic functional group is favorably selected out of a wide range of known silane coupling agents from the standpoint of balance in the adhering property between the obtained hard coating and the light-transmitting member such as the plastic lens material and the hardness of the hard coating.

The content of the epoxy group-containing organosilicon compound (C) is 40 to 80 parts by mass per a total of 100 parts by mass of the fine granular metal oxide (A), the fine granular metal oxide (B) and the epoxy group-containing organosilicon compound (C). If this value is less than 40 parts by mass, adhering property decreases between the obtained hard coating and the light-transmitting member such as the highly refractive index lens material, and the hard coating develops cracks causing defective appearance. If the value exceeds 80 parts by mass, it becomes difficult to increase the refractive index of the obtained hard coating. Here, the epoxy group-containing organosilicon compound (C) is often partly hydrolyzed or condensed. Therefore, the above content is a value of when it is prepared, and the coating composition may often contain a hydrolyzed product or a condensed product stemming from the epoxy group-containing organosilicon compound as the time passes.

### <(D) Water>

The water (D) is a component necessary for promoting the hydrolysis of the epoxy group-containing organosilicon compound (C). That is, in the coating composition of the present invention, the epoxy group-containing organosilicon compound (C) undergoes the hydrolysis, the hydrolyzed product is polymerized and cured in a form of taking the fine granular metal oxides therein to form a cured body that serves as a matrix and whereby a hard coating is formed containing the fine granular metal oxides densely dispersed in the matrix. It is necessary to add water to promote the hydrolysis.
The water is added in an amount of, desirably, 1.0 time to 4.0 times of mol numbers of the total mol numbers corresponding to the hydrolyzable groups (alkoxysilyl groups) contained in the silane coupling agent such as the epoxy group-containing organosilicon compound (C).

The content of the water (D) is 5 to 70 parts by mass per a total of 100 parts by mass of the fine granular metal oxide (A), the fine granular metal oxide (B) and the epoxy group-containing organosilicon compound (C). If the content is less than 5 parts by mass, the alkoxysilyl group contained in the epoxy group-containing organosilicon compound (C) is not sufficiently hydrolyzed, and the adhering property and hardness decrease. If the content is more than 70 parts by mass, wettability decreases and the appearance of the hard coating becomes defective.

Further, the water (D) that is used may be added in the form of an acid aqueous solution to promote the hydrolysis of the epoxy group-containing organosilicon compound (C). For example, it is allowable to add an inorganic acid such as hydrochloric acid, sulfuric acid, nitric acid or phosphoric acid or an organic acid such as acetic acid or propionic acid in the form of an aqueous solution. Among them, the hydrochloric acid and acetic acid are preferably used from the standpoint of preservation stability and hydrolyzing property of the coating composition. In this case, the concentration of the acid aqueous solution is, preferably, 0.001 to 0.5N and, specifically, 0.01 to 0_1N.

As described above, the fine granular metal oxides used in the invention are, usually, provided in the form of dispersions (sols) being dispersed in water or in an organic solvent that will be described later. In this case, by taking into consideration the amount of water contained in the dispersion solutions of the fine granular metal oxides, the amount of water present in the coating composition is so adjusted as to lie in the above-mentioned range.

### <(E) Organic solvents>

The coating composition of the invention desirably contains an organic solvent (E) from the standpoint of wettability and preservation stability of the coating composition. The fine granular metal oxides which are the components (A) and (B) of the invention are, usually, placed in the market in the form of sols using an organic solvent such as alcohol as a dispersion medium. When the coating composition is prepared by using the sols, therefore, the organic solvent (E) is inevitably contained.

The organic solvent (E) serves as a solvent for the epoxy group-containing organosilicon compound (C) and also serves as a dispersion medium for the fine granular metal oxides. Any known organic solvent can be used provided it has the above function and is, at the same time, volatile.
Concrete examples of the organic solvent (E) include alcohols such as methanol, ethanol, propanol, isopropanol, t-butyl alcohol, 2-butanol and diacetone alcohol; lower alcohol esters of lower carboxylic acid, such as methyl acetate, ethyl acetate and propyl acetate; ethers such as cellosolve, dioxane, ethylene glycol monoisopropyl ether and propylene glycol monomethyl ether; ketones such as acetone, methyl ethyl ketone, methylisobutyl ketone and acetylacetone; halogenated hydrocarbons such as methylene chloride; aromatic hydrocarbons such as benzene, toluene and xylene; as well as N-methylpyrrolidone and cyclohexanone. These organic solvents (E) can be used alone or being mixed in two or more kinds together.

Among the above organic solvents (E), it is desired to use, specifically, methanol, isopropanol, t-butyl alcohol, diacetone alcohol, ethylene glycol monoisopropyl ether and acetylacetone from the standpoint of compatibility with the water which is an essential component and easy vaporization at the time of applying and curing the coating composition enabling a smooth and hard coating to be formed. Further, the organic solvent (E) may be partly mixed with the fine granular metal oxides in advance as a dispersion medium for the fine granular metal oxides as described above.

The content of the organic solvent (E) is 100 to 350 parts by mass per a total of 100 parts by mass of the fine granular metal oxide (A), the fine granular metal oxide (B) and the epoxy group-containing organosilicon compound (C). If the content is less than 100 parts by weight, the concentration of the solid components {components (A), (B) and (C)} in the coating composition becomes too high causing a decrease in the preservation stability of the coating composition and defective appearance (nonuniform coating thickness) when the coating composition is applied. If the content is more than 350 parts by mass, on the other hand, the concentration of solid components in the coating composition becomes too low causing the thickness of the hard coating to become too small or the hardness of the coating to be insufficient. The content of the organic solvent (E) is based on a state where the epoxy group-containing organosilicon compound (C) has not been hydrolyzed, and does not include alcohols formed by the hydrolysis of the organosilicon compound.

The water (D) partly works as a dispersion medium and plays the role of stabilizing the silanol formed by the hydrolysis of an alkoxysilyl group in the epoxy group-containing organosilicon compound (C). It is desired that the mixing ratio of the water (D) and the organic solvent (E) (ratio of parts by mass) is D/E = 0.014 to 0.7 and, specifically, in a range of 0.06 to 0.6 from the standpoint of appearance and preservation stability of the hard coating.

### <(F) Curing catalysts>

The curing catalyst (F) works to promote the polymerization and curing of a hydrolyzed product of the epoxy group-containing organosilicon compound (C), and any known compound can be used, such as acetyl acetonato complex, perchlorate, organometal salt, or various Lewis acids in one kind or in a combination of two or more kinds.

As the acetyl acetonato complex, there can be exemplified those disclosed in, for example, JP-A-11-119001 and, concretely, aluminum acetyl acetonato, lithium acetyl acetonato, indium acetyl acetonato, chromium acetyl acetonato, nickel acetyl acetonato, titanium acetyl acetonato, iron acetyl acetonato, zinc acetyl acetonato, cobalt acetyl acetonato, copper acetyl acetonato and zirconium acetyl acetonato. Among them, aluminum acetyl acetonato and titanium acetyl acetonato are desired.

As the perchlorate, there can be exemplified magnesium perchlorate, aluminum perchlorate, zinc perchlorate and ammonium perchlorate. As the organometal salt, there can be exemplified sodium acetate, zinc naphthenate, cobalt naphthenate and zinc octylate. As the Lewis acid, there can be exemplified stannic chloride, aluminum chloride, ferric chloride, titanium chloride, zinc chloride and antimony chloride.

From the standpoint of obtaining a hard coating having a high scratch resistance in a short period of time even at relatively low temperatures according to the present invention, specifically, it is desired to use the acetyl acetonato complex or a perchlorate, i.e., (F) the curing catalyst of which not less than 50% by mass and, specifically, not less than 70% by mass is the acetyl acetonate complex or the perchlorate or, most desirably, (F) the curing catalyst of which the whole amount is the acetyl acetonate complex or the perchlorate.

The content of the curing catalyst (F) may vary depending on its properties but is, usually, selected over a range of 0.2 to 10 parts by mass per a total of 100 parts by mass of the fine granular metal oxide (A), the fine granular metal oxide (B) and the epoxy group-containing organosilicon compound (C).

### <Other additives>

In addition to the above various components, the coating composition of the present invention may be arbitrarily blended with known additives so far as they do not impair the object of the invention. As such additives, there can be exemplified surfactant, antioxidant, radical-trapping agent, ultraviolet stabilizer, ultraviolet absorber, parting agent, anti-coloring agent, antistatic agent, fluorescent dye, dye, pigment, perfume and plasticizer. Further, the coating composition of the present invention can be preferably blended with a known organosilicon compound in which two or more hydrolyzable alkoxy groups are bonded to the silicon atom, as an organosilicon compound other than the component (C).

Concrete examples of the above organosilicon compound include tetraethoxysilane, tetramer of tetraethoxysilane, pentomer of tetraethoxysilane, vinyltrimethoxysilane, vinyltriethoxysilane, vinyltriacetoxysilane, methyltrimethoxysilane, methyltriethoxysilane, methyltriphenoxysilane, dimethyl dimethoxysilane, trimethylmethoxysilane, phenyltrimethoxysilane, diphenyldimethoxysilane, cyclohexylmethyldimethoxysilane, 1,2-bis(trimethoxysilyl)ethane, n-propyltrimethoxysilane, n-butyltrimethoxysilane, isobutyltrimethoxysilane, isobutyltriethoxysilane, n-hexyltrimethoxysilane, n-hexyltriethoxysilane, n-octyltriethoxysilane, n-decyltrimethoxysilane, 1,6-bitrimethoxysilane, 3-ureidopropyltriethoxysilane, bis[3-(diethoxymethylsilyl)propyl]carbonate, trifluoropropyltrimethoxysilane, perfluorooctylethyltriethoxysilane, γ-chloropropyltrimethoxysilane, vinyltri(β-methoxyethoxy)silane, allyltrimethoxysilane, γ-acryloxypropyltrimethoxysilane, γ-acryloxypropyltriethoxysilane, γ-methacryloxypropyltrimethoxysilane, γ-methacryloxypropyltriethoxysilane, γ-methacryloxypropyldimethoxymethylsilane, γ-mercaptopropyltrialkoxysilane, γ-aminopropyltrimethoxysilane, γ-aminopropyltriethoxysilane, N-phenyl-γ-aminopropyltrimethoxysilane, N-2 (aminoethyl) 3-aminopropyltriethoxysilane, N-2(aminoethyl) 3-aminopropyltrimethoxysilane, N-2(aminoethyl) 3-aminopropylmethyldimethoxysilane, p-stylyltrimethoxysilane, 3-isocyanate propyltriethoxysilane, and those which are partly or wholly hydrolyzed or those which are partly condensed.

Among them, as the organosilicon compound for further improving adhering property and crosslinking property to the light-transmitting member such as the plastic lens, there can be exemplified the bis[3-(diethoxymethylsilyl)propyl] carbonate. Further, as the organosilicon compound for increasing the density of the formed hard coating and for further improving the scratch resistance of the obtained optical article, there can be exemplified those having four hydrolyzable alkoxy groups, such as tetraethoxysilane and tetramethoxysilane, dimer to tetramer of tetraethoxysilane or tetramethoxysilane (in the case of the tetramer, there are 10 alkoxy groups in a molecule), as well as methyltriethoxysilane and 1,2-bis(trimethoxysilyl)ethane. The above organosilicon compound can be added being added to the epoxy group-containing organosilicon compound which is the component (C), and can be added in one kind only or in two or more kinds in combination. Among them, it is specifically desired to use the compound exemplified above as the preferred organosilicon compound for improving the adhering property and crosslinking property in combination with the compound exemplified above as the preferred organosilicon compound for improving the scratch resistance.

When these organosilicon compounds are to be used in combination, the amounts thereof may be determined depending upon the kinds thereof. To further improve the adhering property and crosslinking property, however, it is desired that the organosilicon compounds are used in an amount of 0 to 150 parts by mass and, more preferably, 5 to 120 parts by mass per 100 parts by mass of the epoxy group-containing organosilicon compound (C). When the above organosilicon compounds are to be used, too, the content of the organic solvent (E) does not include the alcohols formed by the hydrolysis of the organosilicon compounds like the case of the epoxy group-containing organosilicon compound (C).

The surfactant may be any one of the nonionic, anionic or cationic type. From the standpoint of wettability to the plastic lens material, however, it is desired to use the nonionic type surfactant. Concrete examples of the nonionic type surfactant that can be preferably used include sorbitan fatty acid ester, glycerin fatty acid ester, decaglycerin fatty acid ester, propylene glycol · pentaerythritol fatty acid ester, polyoxyethylene sorbitan fatty acid ester, polyoxyethylene sorbit fatty acid ester, polyoxyethylene glycerin fatty acid ester, polyethylene glycol fatty acid ester, polyoxyethylenealkyl ether, polyoxyethylene phytosterol · phytostanol, polyoxyethylenepolyoxypropylenealkyl ether, polyoxyethylenealkylphenyl ether, poloxyethylene castor oil · cured castor oil, polyoxyethylene lanolin lanolin alcohol · bees wax derivative, polyoxyethylenealkylamine · fatty acid amide, polyoxyethylenealkylphenylformaldehyde condensation product and single-chain polyoxyethylenealkyl ether. The surfactants may be used in two or more kinds being mixed together. The surfactant is added in an amount, desirably, in a range of 0.001 to 1 part by mass per a total of 100 parts by mass of the fine granular metal oxide (A), the fine granular metal oxide (B) and the epoxy group-containing organosilicon compound (C) which are the essential components.

Further, there can be added, as required, hindered phenol antioxidant, phenol type radical scavenger, sulfur type antioxidant, ultraviolet ray absorber of benzotriazole type compound or benzophenone type compound. These additives are, usually, added in amounts, desirably, in a range of 0.1 to 20 parts by mass per a total of 100 parts by mass of the fine granular metal oxide (A), the fine granular metal oxide (B) and the epoxy group-containing organosilicon compound (C).

### <Preparation of the coating composition>

The coating composition of the invention can be prepared by weighing the components in predetermined amounts and mixing them together. As described above, however, the fine granular metal oxides used in the invention are, usually and in many cases, provided in the form of sols dispersed in water or in an organic solvent. Therefore, the coating composition can also be prepared by grasping the ratio of amounts of the components in the sols and so calculating as to finally satisfy the constitution of the invention.
There is no specific limitation on the order of adding the components, and the components may all be added at one time. Or the epoxy group-containing organosilicon compound (C) and the arbitrarily added organosilicon compound other than the component (C) may be mixed in advance into an acid aqueous solution so as to be added to other components in a form in which at least they are partly hydrolyzed or in a form of partly condensed products as the hydrolyzed products thereof are partly condensed. In this case, the hydrolysis is desirably conducted at a temperature of 10 to 40°C so will not to adversely affect the properties of the hard coating and so will not to deteriorate the preservation stability thereof.

### <Forming the hard coating>

The coating composition prepared as described above is, as required, filtered to remove foreign matter and is, thereafter, applied onto the surfaces of the light-transmitting material such as the plastic lens followed by drying and curing to form a hard coating thereon. The coating composition can be applied by a dipping method, spin-coating method, dip spin-coating method, spray method, brush application method or roller application method.
After applied, the curing can be conducted by an ordinary heat treatment. The heating temperature may differ depending upon the base material. Preferably, the pre-curing is conducted at 60 to 80°C for about 5 to about 30 minutes and, thereafter, the curing is conducted at a temperature of 90 to 120°C for about 1 to about 3 hours.
The thus formed hard coating may have a thickness of about 0.5 to about 10 µm and, usually, has a thickness of, desirably, 1.0 to 5.0 µm for the spectacle lenses.

### <Light-transmitting member>

The coating composition of the invention can be applied to known light-transmitting members on which a hard coating is to be formed. Concrete examples of the material for forming the light-transmitting members include plastic optical materials such as (meth)acrylic resin, polycarbonate resin, allyl resin, thiourethane resin, urethane resin and thioepoxy resin. The coating composition can be further applied to forming a hard coating on the light-transmitting material having photochromic properties as described below in detail. The light-transmitting member having photochromic properties will be described next in detail.

The light-transmitting member having photochromic properties (hereinafter often referred to as photochromic member) develops a color when it is irradiated with ultraviolet rays and, therefore, its color tone becomes important. The coating composition of the present invention permits the color tone to vary little and can be applied to forming a hard coating on the surfaces of the photochromic member.
The photochromic member may comprise a light-transmitting member in which a photochromic compound is dispersed or may comprise a plastic optical member exemplified above having a photochromic coating in which the photochromic compound is dispersed. More concretely, the coating composition of the invention can be preferably used for forming a hard coating on a photochromic member prepared by the in-mass method from a polymerizable and curable composition that contains a polymerizable monomer such as (meth) acrylate monomer and a photochromic compound, or on a photochromic member obtained by applying a polymerizable and curable composition containing a polymerizable monomer such as (meth)acrylate monomer and a photochromic compound onto the surfaces of the optical material, followed by curing to form a photochromic coating thereon.

Of them, the latter photochromic member often exhibited deteriorated weather resistance (developed yellow color after used for extended periods of time) since the photochromic coating, usually, contains the photochromic compound in large amounts. Upon forming the hard coating of the coating composition of the invention on the photochromic coating, however, the weather resistance can be improved.

### <Photochromic compounds>

As the photochromic compound, there can be used known photochromic compounds such as chromene compound, spirooxazine compound and fulgimide compound. A plurality of them may be used in combination by taking into account the color tone that develops when irradiated with ultraviolet rays, color density, fading rate, weather resistance and solubility.

As representative photochromic compounds, there can be preferably used the compounds disclosed in JP-A-2-28154, JP-A-62-288830, WO94/22850 and WO96/14596.
As the compounds having excellent photochromic properties, there can be also favorably used the compounds disclosed in WO2008/023828, WO2004/078364, WO2005/028465, WO02/090342, WO03/042203, WO01/60811, JP-A-2008-074832, JP-A-2004-262837, JP-A-2004-339184, JP-A-2004-203813, JP-A-2005-112772, JP-A-2005-187420, JP-A-2001-114775, JP-A-2001-031670, JP-A-2001-011067, JP-A-2001-011066, JP-A-2000-347346, JP-A-2000-344762, JP-A-2000-344761, JP-A-2000-327676, JP-A-2000-327675, JP-A-2000-256347, JP-A-2000-229976, JP-A-2000-229975, JP-A-2000-229974, JP-A-2000-229973, JP-A-2000-229972, JP-A-2000-219687, JP-A-2000-219686, JP-A-2000--219685, JP-A-11-322739, JP-A-11-286484, JP-A-11-279171, JP-A-10-298176, JP-A-09-218301, JP-A-09-124645, JP-A-08-295690, JP-A-08-176139 and JP-A-08-157467.

Among these photochromic compounds, the chromene type photochromic compounds exhibit photochromic properties maintaining better durability, higher color densities and quicker fading rates than those of other photochromic compounds and can, therefore, be favorably used. Among the chromene type photochromic compounds, further, those compounds having molecular weights of not less than 540 exhibit higher color densities and quicker fading rates than those of other chromene type photochromic compounds and can be specifically preferably used.

### <Optical articles>

The light-transmitting member (optical article) having, formed on the surfaces thereof, a hard coating comprising the coating composition of the invention can be used as spectacle lenses, camera lenses, liquid crystal displays and windows of houses and automobiles, and can be specifically preferably used as spectacle lenses.
The optical article having the hard coating obtained by the present invention and, specifically, the optical article such as a spectacle lens can, as required, be further subjected to the reflection-preventing treatment such as depositing a thin film of an inorganic oxide like silicon oxide, titanium oxide or zirconium oxide or applying an organic thin high molecular film on the hard coating, or to the working such as antistatic treatment or to the secondary treatment. In particular, the hard coating formed by using the coating composition of the invention permits color tone to vary little in a nitrogen atmosphere, and can be favorably used for such applications as spectacle lenses which are provided with a reflection-preventing coating formed on the hard coatings thereof to shut off oxygen.

The invention will be described in further detail by way of Examples to which only, however, the invention is in no way limited. Further, it does not mean that the combinations of features described in Examples are all essential as means for solving the problems of the invention.

### EXAMPLES

Described below are the light-transmitting members (plastic lens materials) used in Examples and Comparative Examples, as well as the components used for preparing the coating compositions and their abbreviations.
[Plastic lens materials: light-transmitting members]-2.0 mm thick.
Lens 1: Thiourethane type plastic lens, refractive index = 1.60.
Lens 2: Thiourethane type plastic lens, refractive index = 1.67.
Lens 3: Thioepoxy type plastic lens, refractive index = 1.71.
Lens 4: Lens of a plastic lens material having a photochromic
coating on the surfaces thereof.

### [Preparation of the lens 4]

Radically polymerizable monomers, i.e., 2,2-bis(4-acryloyloxypolyethylene glycol phenyl)propane having an average molecular weight of 776/polyethylene glycol diacrylate (average molecular weight of 532)/trimethylolpropane trimethacrylate/polyesteroligomer hexaacrylate/glycidyl methacrylate were blended at a blending ratio of 40 parts by mass/15 parts by mass/25 parts by mass/10 parts by mass/10 parts by mass. Next, to 100 parts by mass of the mixture of the radically polymerizable monomers was added 3 parts by weight of a photochromic compound (1) and was dissolved therein with ultrasonic waves at 70°C for 30 minutes. Thereafter, to the obtained composition were added 0.35 parts by mass of a mixture of a polymerization initiator, i.e., CGI1870: 1-hydroxycyclohexylphenyl ketone and a bis(2,6-dimethoxybenzoyl)-2,4,4-trimethyl pentylphosphinoxide (weight ratio of 3:7), 5 parts by mass of a stabilizer, i.e., bis(1,2,2,6,6-pentamethyl-4-piperidyl) sebacate, 3 parts by mass of a triethylene glycol bis[3-(3-t-butyl-5-methyl-4-hydroxyphenyl)propionate, 7 parts by mass of a silane coupling agent, i.e., γ-methacryloyloxypropyltrimethoxysilane, and 0.1 part by mass of a leveling agent, i.e., the silicone surfactant L-7001 manufactured by Toray-Dow Coning Co., and were mixed to a sufficient degree to prepare a photochromic curable composition.

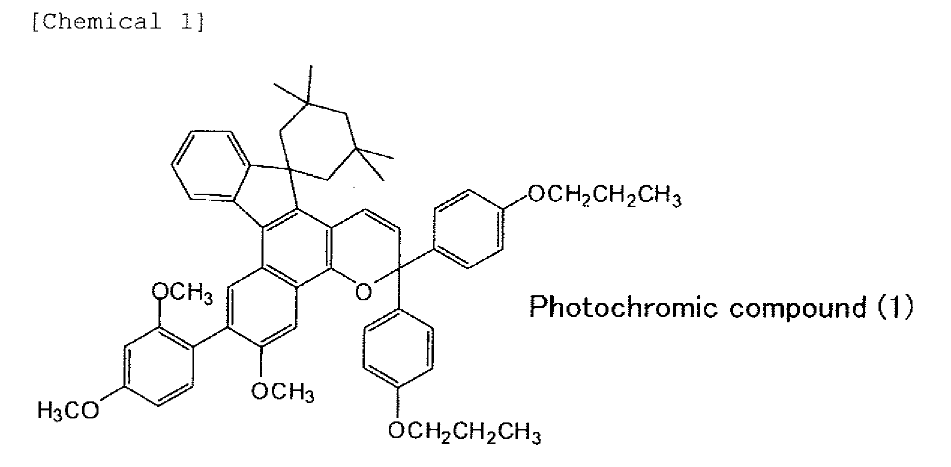

As the plastic lens material, there was used a lens B having a thickness of 2.0 mm (thiourethane type plastic lens; refractive index = 1.60). The plastic lens material was sufficiently dewaxed with acetone, treated with a 5% sodium hydroxide aqueous solution of 50°C for 4 minutes, washed with flushing water for 4 minutes, washed with distilled water of 40°C for 4 minutes, and was dried at 70°C. Next, a moisture-curing primer "Take-Seal PFR402TP-4" manufactured by Takebayashi Kagaku Kogyo Co. and an ethyl acetate were mixed together each in an amount of 50 parts by mass. To the mixed solution was further added 0.03 parts by mass of a leveling agent, FZ-2104, manufactured by Toray-Dow Coning Co., and the mixture was sufficiently stirred in a nitrogen atmosphere until it became homogeneous to thereby prepare a coating solution. By using a spin coater, 1H-DX2, manufactured by MIKASA Co., the surfaces of the lens B were spin-coated with the above primer coating solution. The lens was left to stand at room temperature for 15 minutes to obtain a lens material having a primer coating of a thickness of 7 µm.

Next, the surfaces of the lens material having the primer coating were spin-coated with about one gram of the above photochromic curable composition. The lens of which the surfaces were coated with the photochromic curable composition was irradiated with light for 3 minutes in a nitrogen gas atmosphere by using F3000SQ mounting a D-bulb manufactured by Fusion UV Systems Co. and of which the output at 405 nm was adjusted to be 150 mW/cm² on the surfaces of the lens to thereby cure the coating. Thereafter, the heat treatment was conducted for 1 hour in a constant temperature oven maintained at 110°C to form a photochromic coating. The thickness of the photochromic coating could be adjusted by varying the conditions of spin-coating. In the invention, the thickness of the photochromic coating was adjusted to be 40 ± 1 µm.

### [Component (A); Fine granular metal oxides]

A1: A sol of a fine granular composite metal oxide containing 3.0% by mass of zirconium oxide, 76.0% by mass of tin oxide and 20.0% by mass of titanium dioxide dispersed in methanol {solid component concentration (concentration of the fine granular composite inorganic oxide) of 30% by mass, ΔYI = 1.0}[HIT-30M1 manufactured by Nissan Kagaku Kogyo Co.].
A2: A sol of a fine granular composite metal oxide containing 17.7% by mass of zirconium oxide, 14.7% by mass of antimony pentoxide, 11.0% by mass of silicon dioxide and 56.6% by mass of titanium dioxide dispersed in methanol {solid component concentration (concentration of the fine granular composite inorganic oxide) of 30% by mass, ΔYI = 1.3}[HT-335M6 manufactured by Nissan Kagaku Kogyo Co.].
A3: A sol of a fine granular composite metal oxide containing 10.0% by mass of zirconium oxide, 36.7% by mass of tin oxide, 10.0% by mass of antimony pentoxide, 6.7% by mass of silicon dioxide, 6.7% by mass of tungsten oxide and 30.0% by mass of titanium dioxide dispersed in methanol {solid component concentration (concentration of the fine granular composite inorganic oxide) of 30% by mass, ΔYI = 4.6}[HIT-317M6 manufactured by Nissan Kagaku Kogyo Co.].
A4: A sol of a fine granular composite metal oxide containing 14.3% by mass of zirconium oxide, 12.0% by mass of tin oxide, 12.3% by mass of silicon dioxide and 61.3% by mass of titanium dioxide dispersed in methanol {solid component concentration (concentration of the fine granular composite inorganic oxide) of 30% by mass, ΔYI = 0.6}[HT-355M7 manufactured by Nissan Kagaku Kogyo Co.].

### [Component (B); Fine granular metal oxides]

B1: A sol of a fine granular composite metal oxide containing 1. 6% by mass of zirconium oxide, 19.6% by mass of silicon dioxide and 78.0% by mass of titanium dioxide dispersed in methanol {solid component concentration (concentration of the fine granular composite inorganic oxide) of 30% by mass, ΔYI = -0.8} [TY108 manufactured by JGC Catalysts and Chemicals Ltd.]. B2: A sol of a fine granular composite metal oxide containing 4 .8% by mass of zirconium oxide, 26. 6% by mass of silicon dioxide and 66.6% by mass of titanium dioxide dispersed in methanol {solid component concentration (concentration of the fine granular composite inorganic oxide) of 30% by mass, ΔYI = -0.6} [TY106 manufactured by JGC Catalysts and Chemicals Ltd.].

### [Component (C); Epoxy group-containing organosilicon compounds]

C1: γ-glycidoxypropyltrimethoxysilane
C2: γ-glycidoxypropylmethyldimethoxysilane

### [Component (D); Water]

D1: distilled water
D2: 0.05N hydrochloric acid aqueous solution

### [Component (E); Organic solvents]

E1: methanol
E2: t-butanol
E3: isopropanol
E4: ethylene glycol monoisopropyl ether
E5: diacetone alcohol
E6: acetylacetone
E7: N-methylpyrrolidone

### [Component (F); Curing catalyst]

F1: tris(2,4-pentanedionato)aluminum (III)

### [Fine granular metal oxide other than the components A and B]

SOL1: A sol of a fine granular composite metal oxide containing 11.7% by mass of zirconium oxide, 77.7% by mass of tin oxide, 3.6% by mass of silicon dioxide and 7.0% by mass of antimony pentoxide dispersed in methanol {solid component concentration (concentration of the fine granular composite inorganic oxide) of 30% by mass, ΔYI = 1.0}[HT-355M7 manufactured by Nissan Kagaku Kogyo Co.].

### [Organosilicon compounds other than the component (C)]

SC1: tetraethoxysilane
SC2: methyltriethoxysilane
SC3: bis(triethoxysilyl)ethane
SC4: bis[3-(diethoxymethylsilyl)propyl]carbonate

### [Preparation of coating compositions]

### Coating composition (1) :

123.8 Grams of a γ-glycidoxypropyltrimethoxysilane, 32.0 g of a γ-glycidoxypropylmethyldimethoxysilane, 47.0 g of a tetraethoxysiane, 61.7 g of a t-butyl alcohol, 204.0 g of a diacetone alcohol and 1.0 g of a silicone surfactant (trade name "L-7001" manufactured by Toray-Dow Coning Co.) were mixed together. While sufficiently stirring the solution thereof, a mixture of 104.0 g of water and 52.0 g of 0.05N hydrochloric acid was added thereto. After the addition has been finished, the stirring was continued for 20 hours. Next, 9.8 g of a tris(2,4-pentanedionato)aluminum(III) was mixed thereto, and the stirring was continued for one hour. Next, 115 g of a fine granular metal oxide "A2" and 340 g of a fine granular metal oxide "B1" were added thereto followed by stirring for another 24 hours to obtain a coating composition (1) of the present invention. The blending thereof was as shown in Table 1.

### Coating compositions (2) to (16):

Coating compositions were prepared in the same manner as that of the coating composition (1) but using the fine granular metal oxide {component (A)}, fine granular metal oxide {component (B)}, epoxy group-containing organosilicon compound {component (C)}, water {component (C7)}, organic solvent { component (E)}, curing catalyst {component (F)}, fine granular metal oxide other than the components (A) and (B), and organosilicon compounds other than the component (C). The blendings thereof were as shown in Tables 1 and 2.

### Example 1.

As a plastic lens material, a lens 1 (thiourethane type plastic lens) of thickness of 2 mm was alkali-etched in an aqueous solution of 20% by weight of sodium hydroxide maintained at 60°C for 10 minutes by using an ultrasonic washer. Thereafter, the lens was washed with distilled water and hot water of 50°C to remove the remaining alkali component followed by drying at room temperature for 10 minutes. The lens material that has been etched with alkali was dip-coated with the coating composition (1) at 20°C and at a pull-up rate of 20 cm/min. After pre-cured in an oven maintained at 70°C for 10 minutes, the coating was cured at 110°C for 2 hours to obtain a hard-coated lens (optical article) having a hard coating of a refractive index of 1.69 and a thickness of 2.8 µm formed on both surfaces thereof.
The hard-coated lens was evaluated concerning the following items (1) to (5).
As a result, the hard-coated lens exhibited appearance ○, steel wool scratch resistance B, adhering property on the convex surface 100/100, weather-resisting adhering property 100/100 and yellow color-developing deterioration 0.3. The results were as shown in Table 3.

### {Items evaluated}

### (1) Appearance.

Transparency of the coating and cracks at the time of curing were observed with the eye. Those having good appearance were evaluated to be ○ and those having poor appearance were evaluated to be X.

### (2) Steel wool scratch resistance.

By using a steel wool (Bonstar #0000 manufactured by Nihon Steel Wool Co.), the surfaces of the lens were rubbed 10 round trips while applying a load of 1 kg thereon, and the scratched degree was evaluated with the eye. The evaluation was on the following basis of five steps.
A: Was not almost scratched.
B: Scratched very little.
C: Scratched a little.
D: Scratched distinctly.
E: The coating was removed.

### (3) Adhering property.

Adhering property between the hard coating and the plastic lens material was evaluated by the cross-cut tape test in compliance with the JIS D-0202. That is, by using a cutter knife, the surface of the lens was incised maintaining a gap of about 1 mm to form 100 squares. An adhesive cellophane tape (Cellotape (registered trademark), manufactured by Nichiban Co.) was strongly stuck thereon, and was pulled and removed at one time in a direction of 90° relative to the surface, and the squares of the hard coating still remaining were counted. The evaluated results were expressed as the (remaining number of squares)/100. The evaluation was made on the convex surface of the lens.

### (4) Weather-resisting adhering property.

After having conducted the following deterioration promotion test, the adhering property was evaluated when the weather resistance was being deteriorated by the irradiation with light.
By using a xenon weatherometer X25 (2.5 kW xenon arc lamp) manufactured by Suga Shikenki Co., the sample hard-coated lens was irradiated with light for 100 hours under the conditions of an irradiation intensity of 40 W/m² and a lens surface temperature of 50°C to promote the deterioration. Thereafter, the weather-resisting adhering property was evaluated in the same manner as that of the adhering property (3) above. (5) Yellow color-developing deterioration.
After having conducted the following deterioration promotion test, the yellow color-developing deterioration was evaluated when the weather resistance was being deteriorated by the irradiation with light.
By using F3000SQ mounting a D-bulb manufactured by Fusion UV Systems Co. and of which the output at 405 nm was adjusted to be 150 mW/cm² on the surface of the lens, the obtained hard-coated lens was irradiated with light for 5 minutes in the nitrogen atmosphere to promote the deterioration. Next, by using an SM color computer (SM-T) manufactured by Suga Shikenki Co., YI(YI₀) of before promoting the deterioration and YI (YI₁) after the deterioration was promoted were measured, and the yellow color-developing deterioration was found according to the following formula to evaluate the development of yellow color.
Yellow color-developing deterioration (ΔYI) = YI₁ - YI₀
The smaller the yellow color-developing deterioration (ΔYI), the less the yellow color-developing deterioration of the lens after it has been deteriorated. A negative value means that the color of the lens has changed into a blue color. If the vale is not more than 1.0 in terms of an absolute value, there is no problem in practice.

### Examples 2 to 14.

Hard-coated lenses (optical articles) having a hard coating were prepared in the same manner as in Example 1 but using plastic lens materials and coating compositions shown in Table 2, and were evaluated. The evaluated results were as shown in Table 3.

### Comparative Examples 1 to 4.

Hard-coated lenses (optical articles) having a hard coating were prepared in the same manner as in Example 1 but using plastic lens materials and coating compositions shown in Table 2, and were evaluated. The evaluated results were as shown in Table 3.

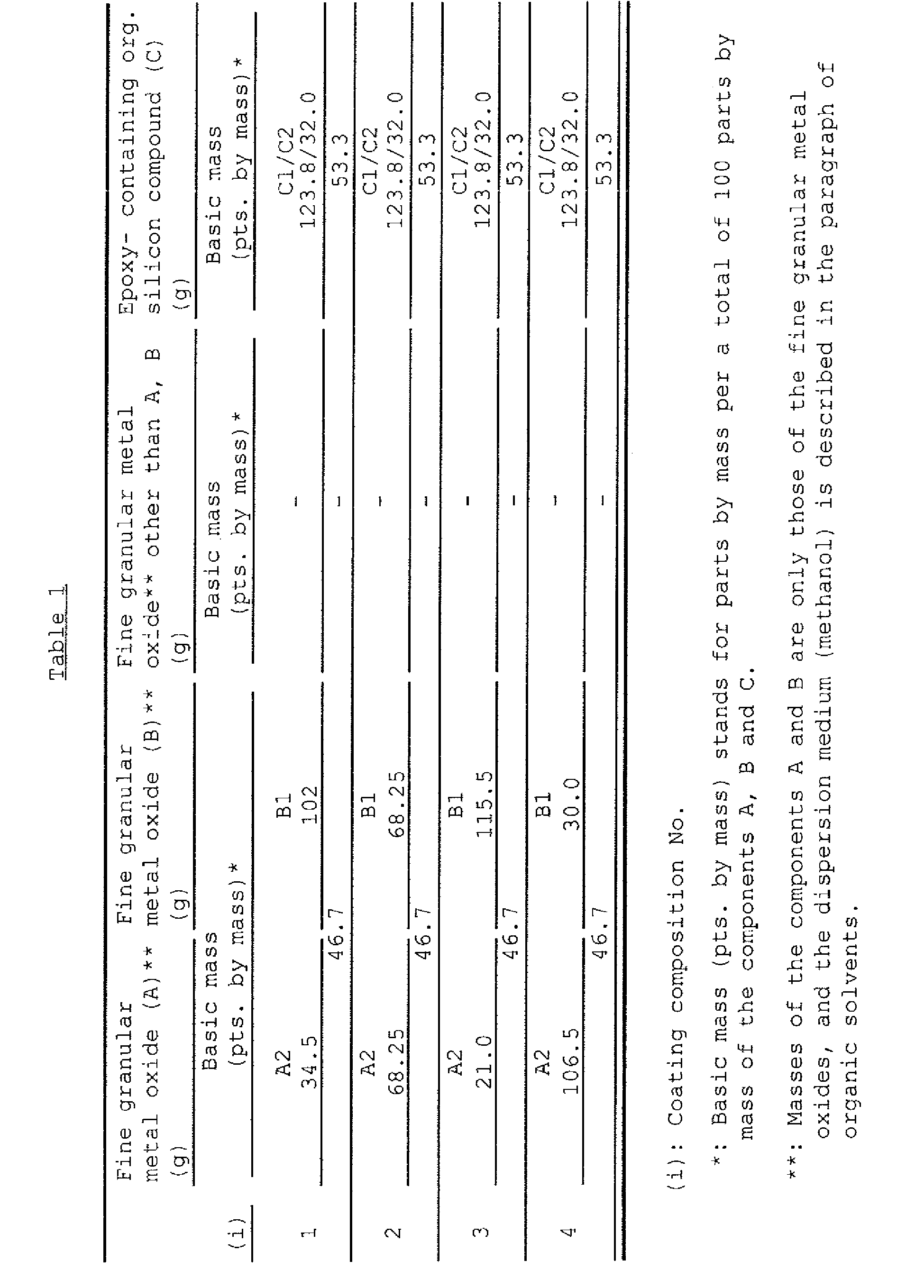

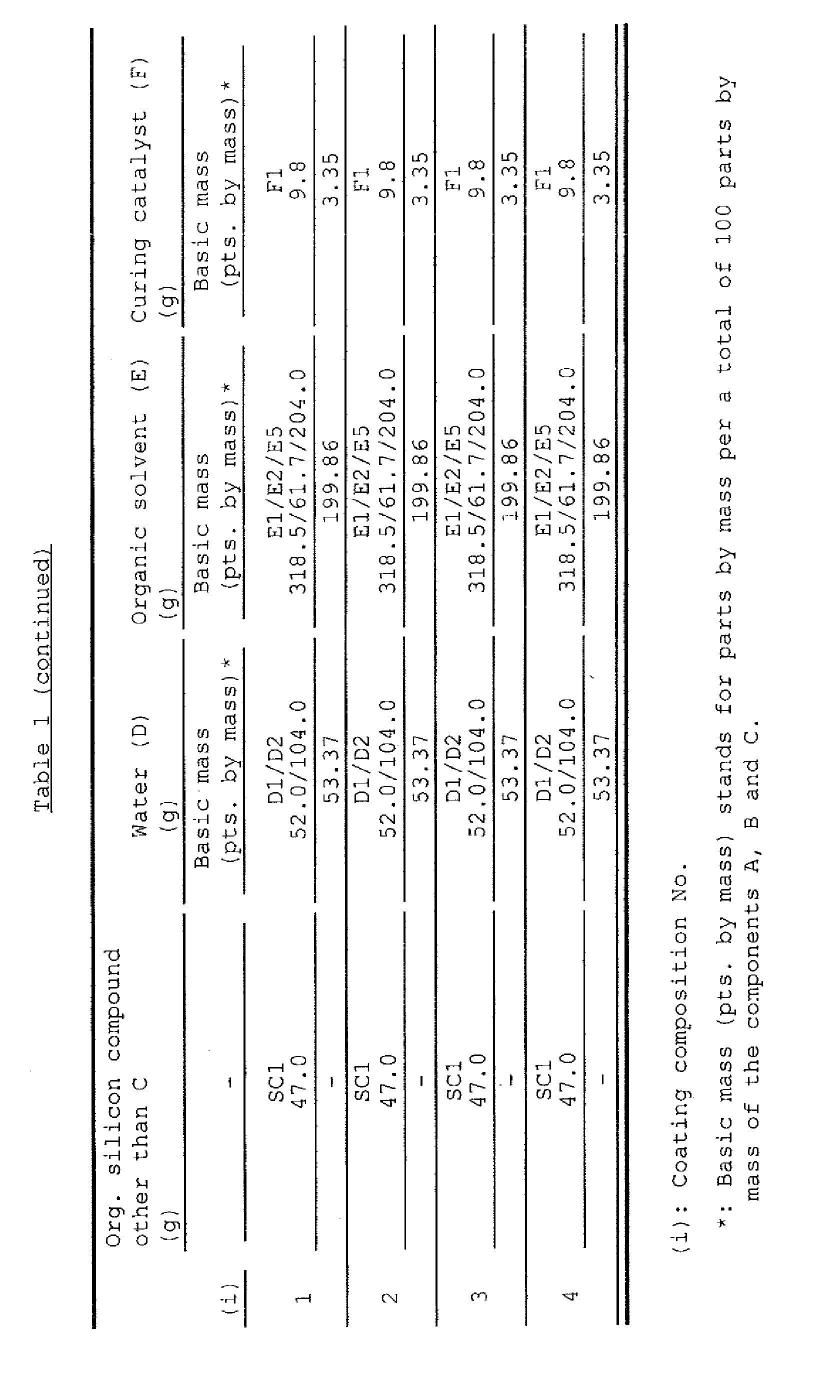

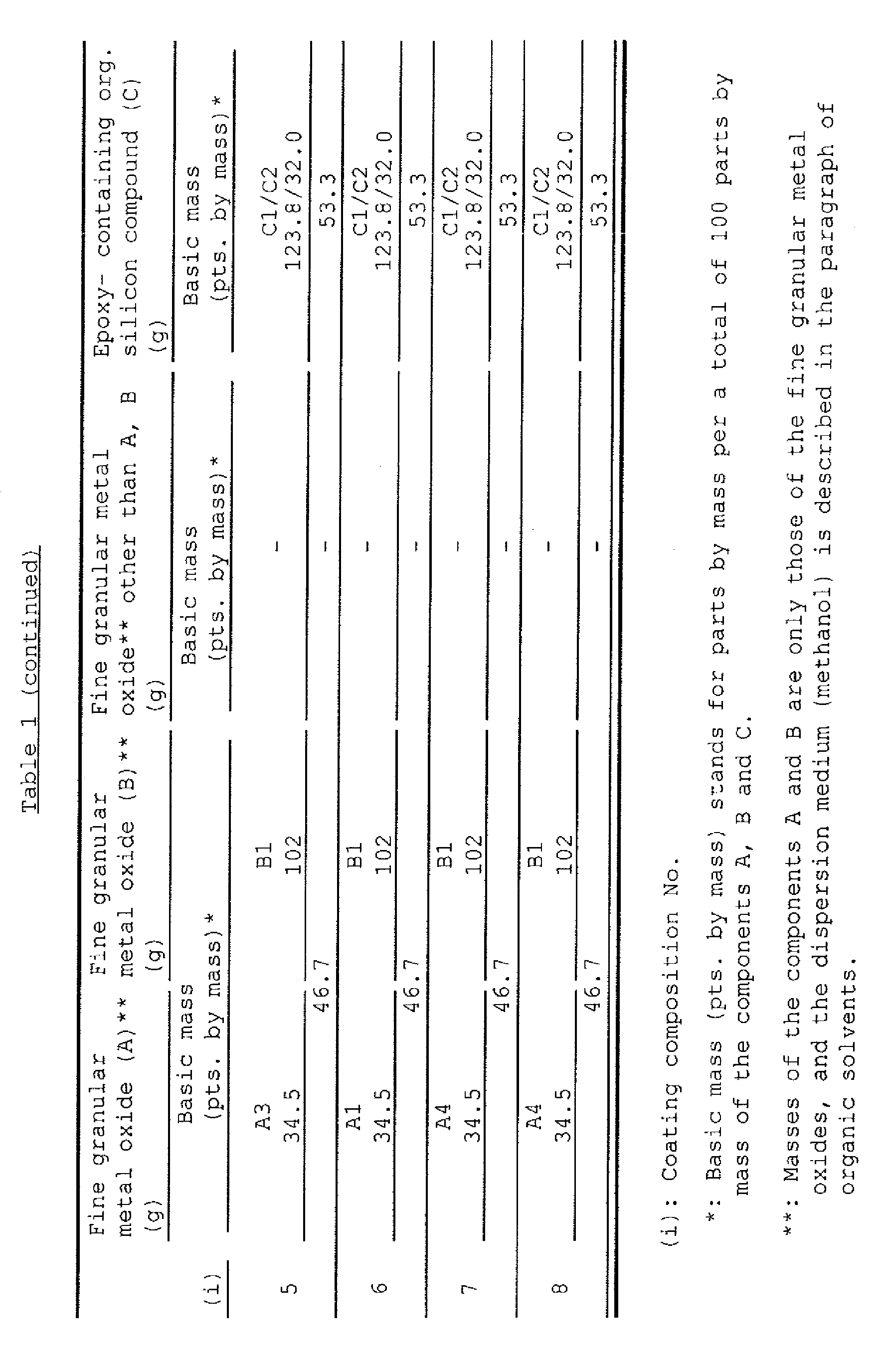

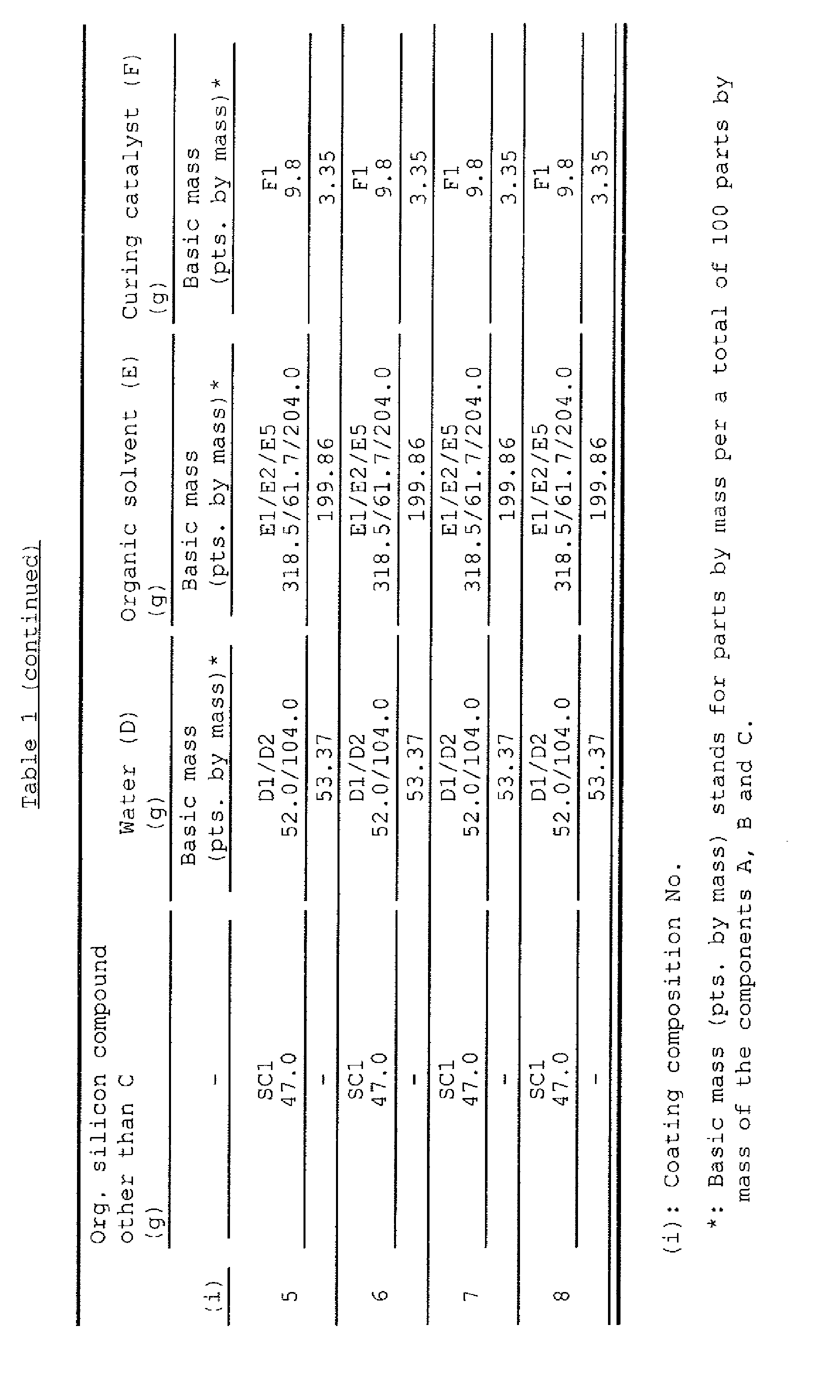

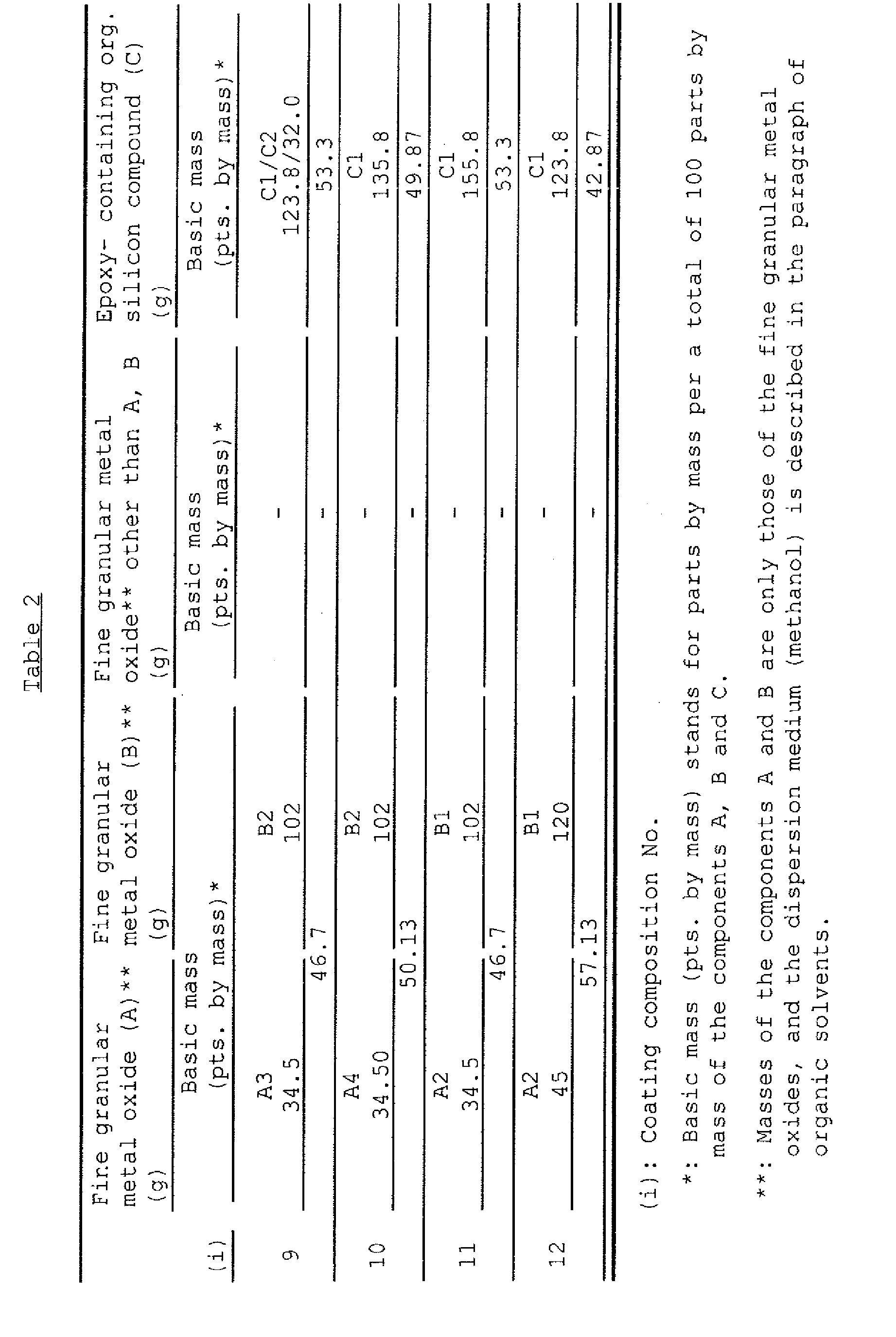

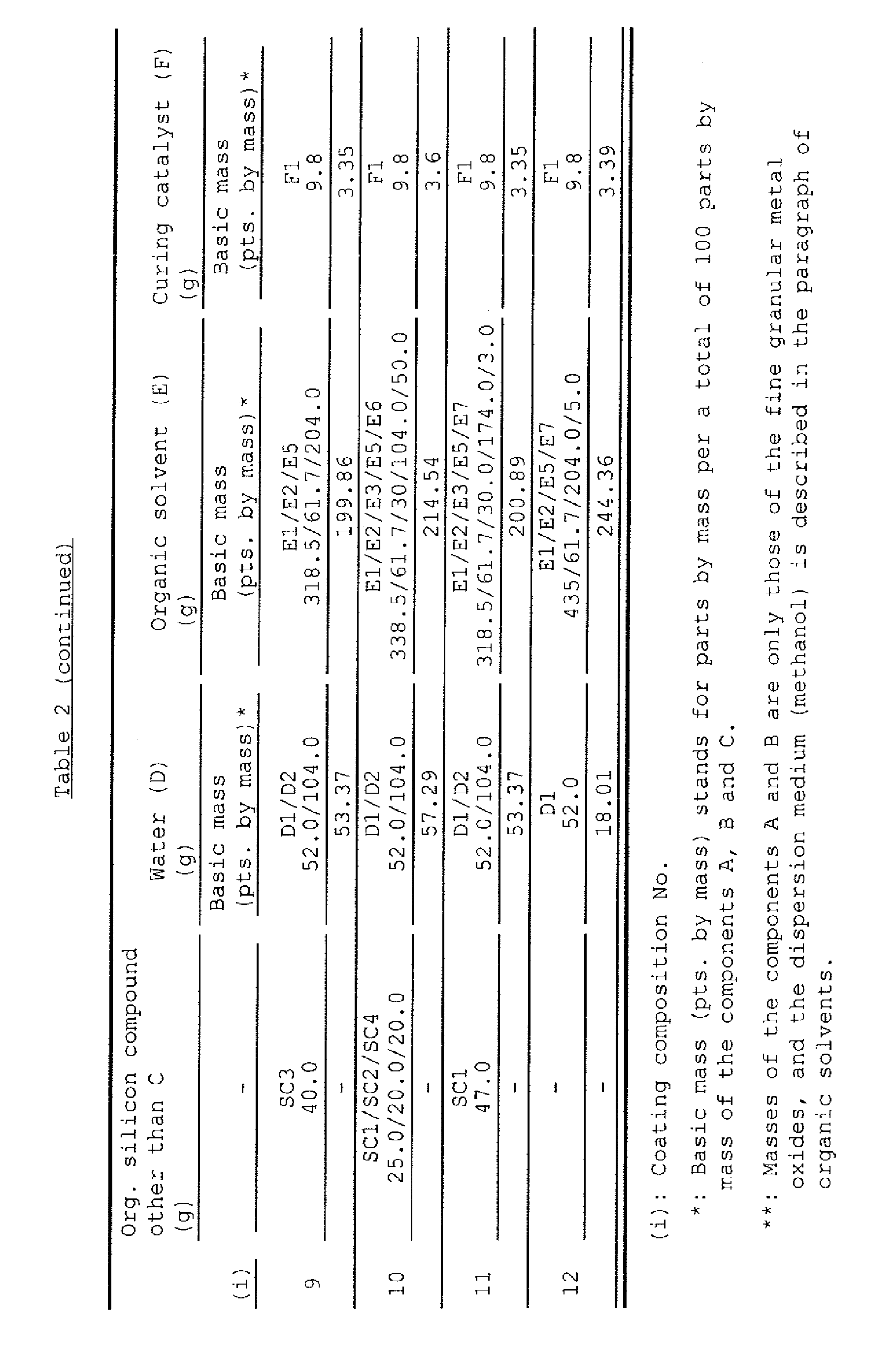

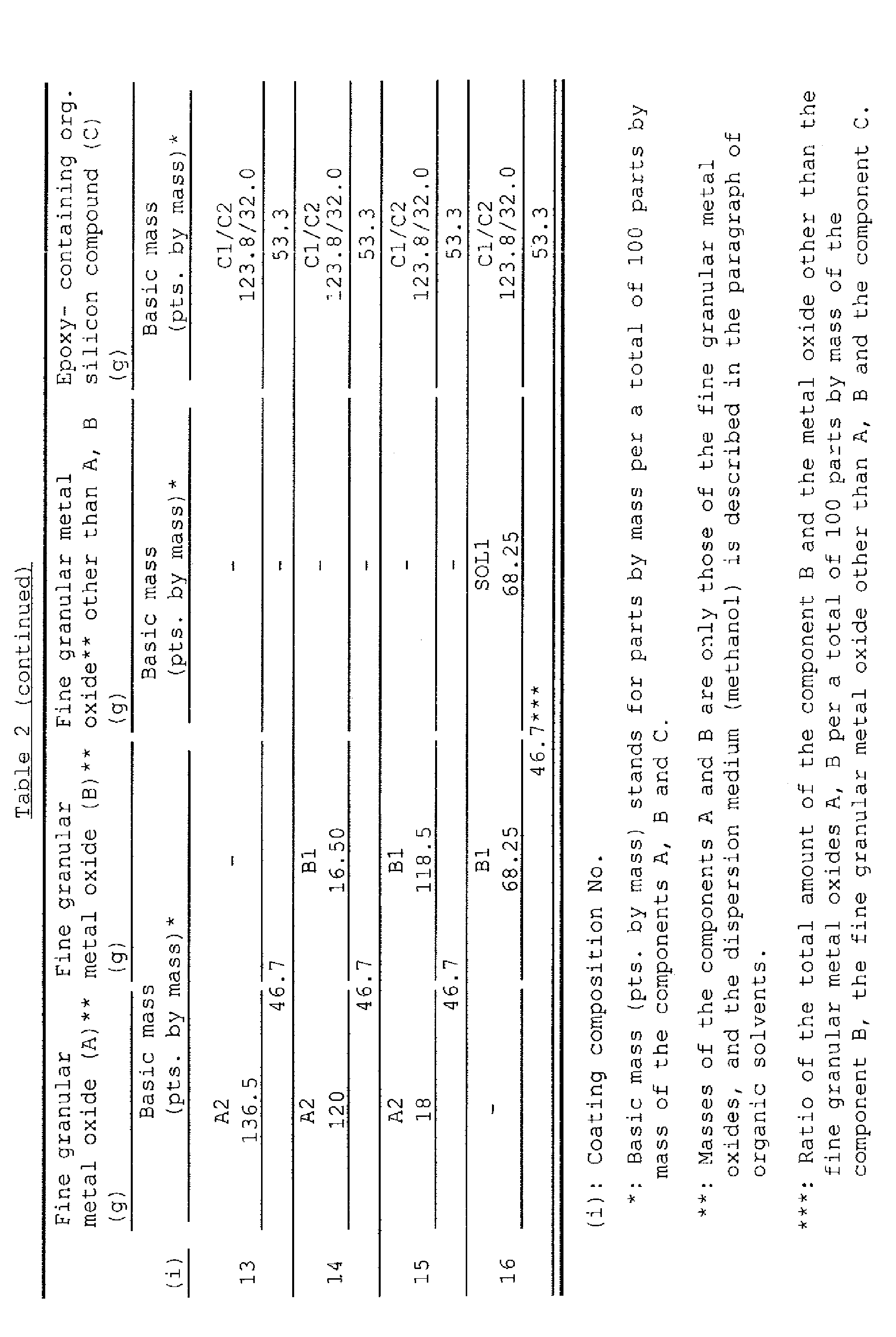

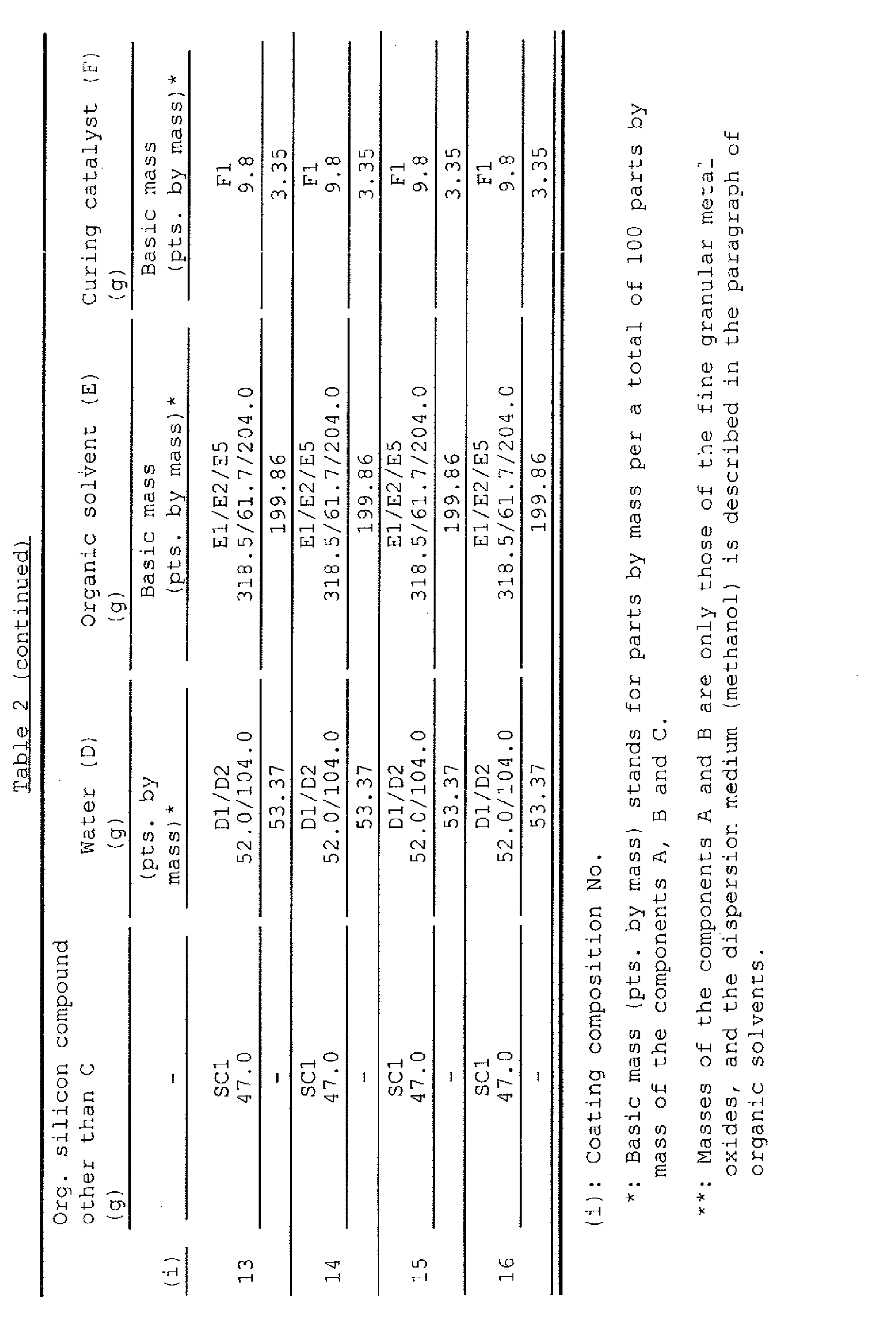

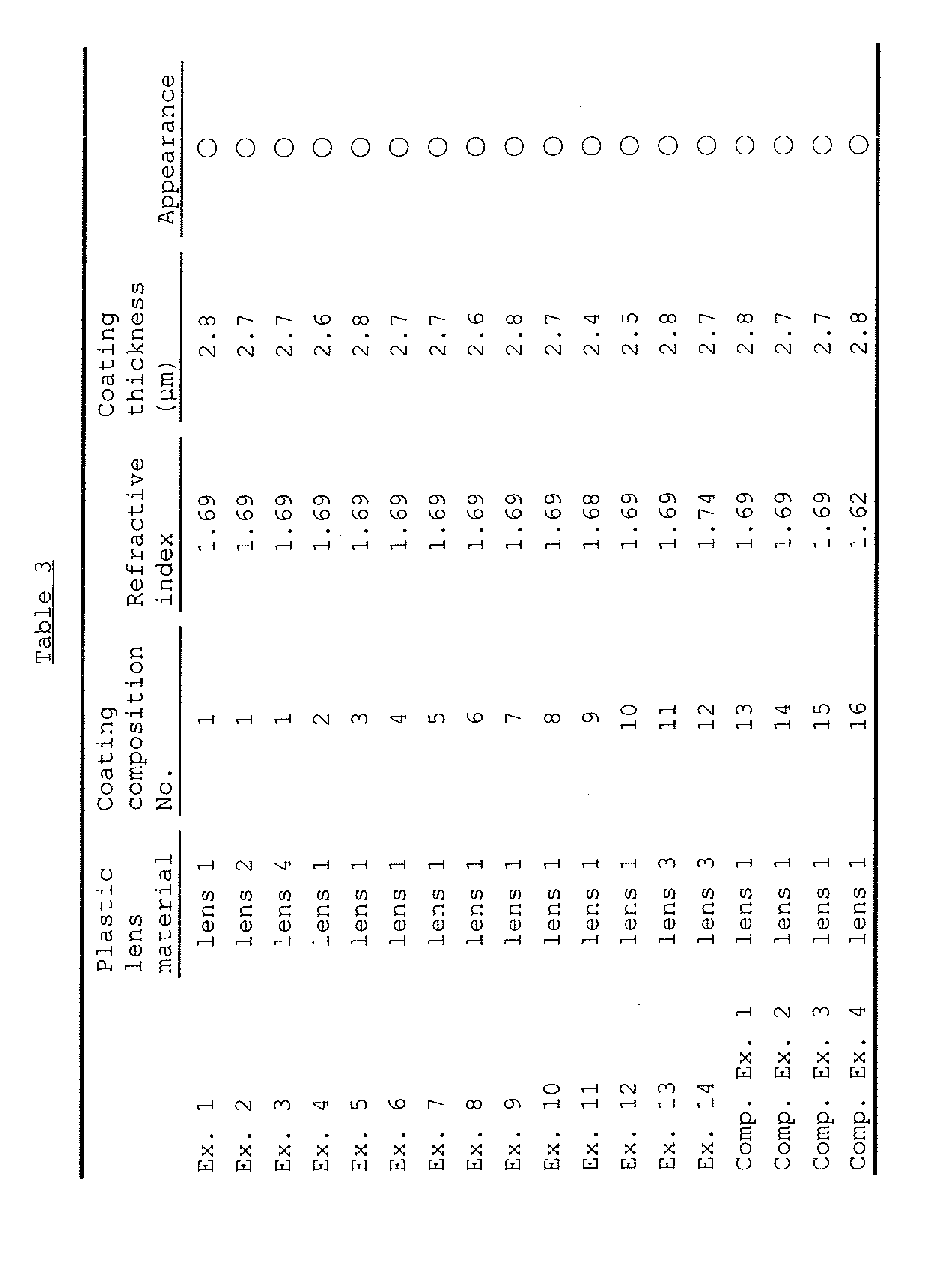

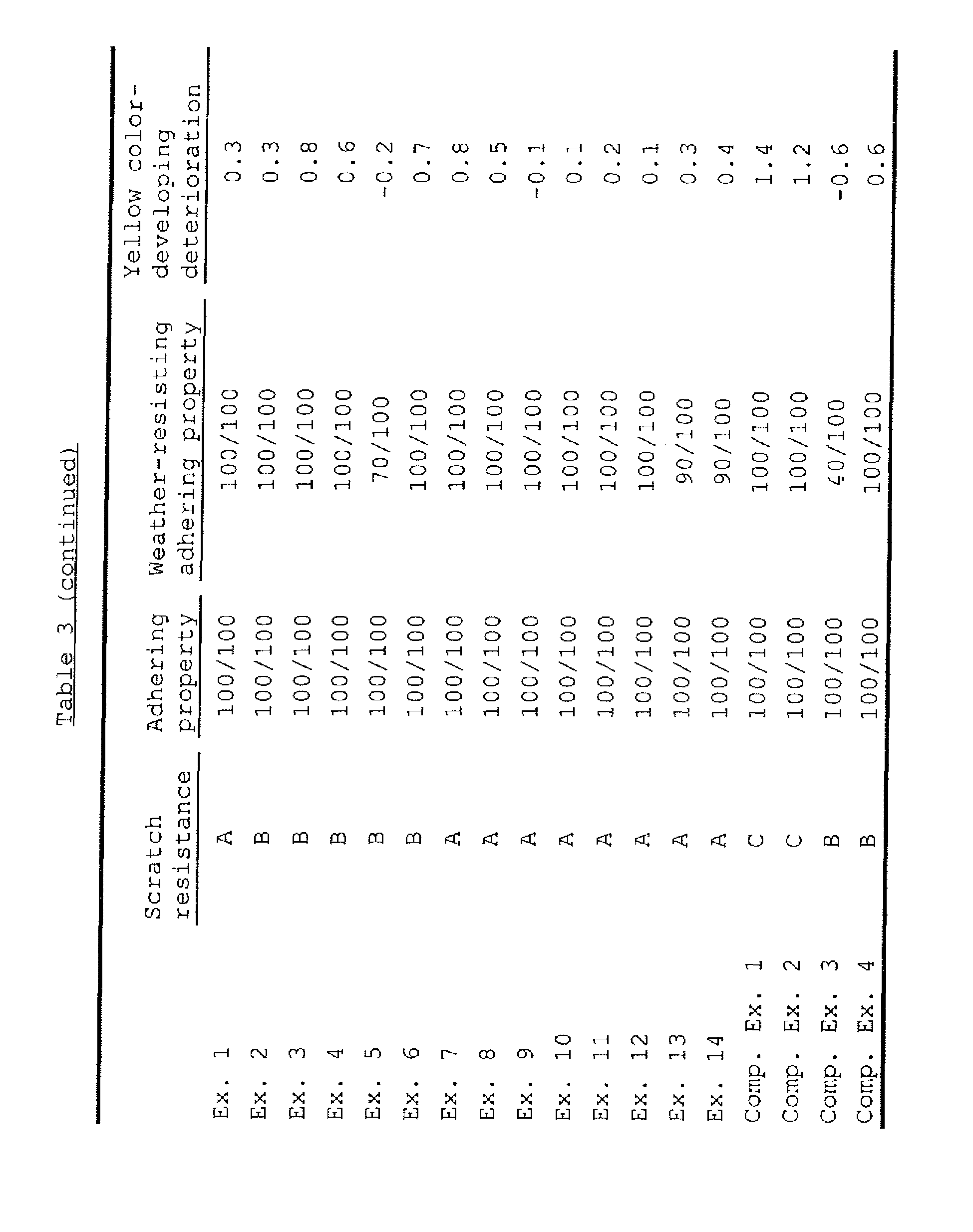

When the coating compositions of the invention are used as will be obvious from Examples 1 to 14, there can be formed hard coatings having refractive indices of not smaller than 1.65 and featuring excellent appearance, scratch resistance, adhering property, weather-resisting adhering property and resistance against yellow color-developing deterioration. When the coating compositions of Comparative Examples 1 to 4 are used, on the other hand, the coatings were insufficient in regard to at least one or more of appearance, scratch resistance, adhering property, weather-resisting adhering property, resistance against yellow color-developing deterioration and refractive index.

## Claims

1. A coating composition comprising:
(A) a fine granular metal oxide containing titanium oxide of which a coating that is formed exhibiting a value ΔYI of 0.5 to 10.0 as measured by the following light irradiation test;
(B) a fine granular metal oxide containing titanium oxide of which a coating that is formed exhibiting a value ΔYI of -0.1 to -1.0 as measured by the following light irradiation test;
(C) an epoxy group-containing organosilicon compound;
(D) water;
(E) an organic solvent; and
(F) a curing catalyst;
wherein the water (D) is contained in an amount of 5 to 70 parts by mass, the organic solvent (E) is contained in an amount of 100 to 350 parts by mass and (F) the curing catalyst is contained in an amount of 0.2 to 10 parts by mass per a total of 100 parts by mass of the fine granular metal oxide (A), the fine granular metal oxide (B) and the epoxy group-containing organosilicon compound (C); and
the essentials of the total of 100 parts by mass of the fine granular metal oxide (A), the fine granular metal oxide (B) and the epoxy group-containing organosilicon compound (C) being such that the total amount of the fine granular metal oxide (A) and the fine granular metal oxide (B) is 20 to 60 parts by mass, the amount of the epoxy group-containing organosilicon compound (C) is 40 to 80 parts by mass, and the mass ratio (B/A) of the fine granular metal oxide (A) and the fine granular metal (B) is 0.2 to 6.0.
Light irradiation test:
1) Preparation of a coating solution: 13.4 Parts by mass of a 0.05N hydrochloric acid aqueous solution is added to 60 parts by mass of a γ-glycidoxypropyltrimethoxysi lane with stirring maintaining a temperature in a range of 15 to 30°C. Thereafter, the mixture is stirred for about 2 hours and to which are, successively, added 0.2 parts by mass of a silicone surfactant (trade name "L-7001" manufactured by Toray-Dow Coning Co.), 120 parts by mass of a t-butyl alcohol and 0.7 parts by mass of a tris(2,4-pentanedionato)aluminum (III). The solution is stirred at room temperature for 30 minutes, and to which is added 40 parts by mass (excluding the dispersion medium) of the fine granular metal oxides dispersed in a dispersion medium, and the mixture is stirred at room temperature for another 2 hours, and is used as a coating solution.
2) Coating method: A glass plate is dipped in the thus obtained coating solution and is pulled up from the coating solution at a rate of 10 to 30 cm/min. so that the thickness of the coating finally obtained is about 2 µm. Thereafter, the coating is cured at 70°C for 10 minutes and at 110°C for 2 hours to obtain a laminate having a coating of a thickness of about 2 µm on the glass plate.
3) Light irradiation test of the laminate: The obtained laminate is irradiated with an ultraviolet ray of a wavelength of 405 nm at an intensity of 150 mW/cm² for 5 minutes in a nitrogen atmosphere to measure a degree of yellow color (YI₁), and a difference (ΔYI = YI₁ - YI₀) is found from the degree of yellow color (YI₀) of the laminate of before irradiated with ultraviolet rays.

2. The coating composition according to claim 1, wherein the fine granular metal oxide (B) is a fine granular composite metal oxide containing a fine granular titanium oxide of which the surfaces are covered with a silane coupling agent.

3. An optical article comprising a light-transmitting member and a hard coating formed on the surfaces of the light-transmitting member, the hard coating being the coating obtained by curing the coating composition of claim 1.

4. The optical article according to claim 3, wherein the light-transmitting member is a light-transmitting member having photochromic properties.

5. The optical article according to claim 4, wherein the light-transmitting member having photochromic properties is provided with a photochromic coating obtained by curing a photochromic compound-containing curable composition on the surfaces of an optical material, and a hard coating is formed on the surface of the photochromic coating.
